# EUROPEAN PATENT SPECIFICATION

(11) **EP 3 168 072 B1**
(45) Date of publication and mention of the grant of the patent: **30.12.2020**
(21) Application number: 15306802.8
(22) Date of filing: 13.11.2015
(51) Int. Cl.: B60J 7/00, B60J 7/02

(54) **FRAME OF A SUNROOF ARRANGEMENT AND/OR OF A VEHICLE SHADING SYSTEM**
RAHMEN EINER SONNENDACHANORDNUNG UND/ODER EINES FAHRZEUGBESCHATTUNGSSYSTEMS
CADRE D'UN SYSTÈME DE TOIT OUVRANT ET/OU D'UN SYSTÈME D'OMBRAGE POUR VÉHICULE

(43) Date of publication of application: 17.05.2017
(73) Proprietor: Webasto SE, 82131 Stockdorf (DE)
(72) Inventor: VIVIEN, Jacques, 85700 LES CHATELLIERS-CHATEAUMUR (FR)
(74) Representative: advotec.

(56) References cited:
- EP-A1- 2 394 832
- EP-A1- 2 679 422
- WO-A1-2011/012116
- WO-A1-2011/086084
- WO-A1-2015/137083
- DE-A1- 19 746 545
- JP-A- H09 226 379
- US-A1- 2010 320 808

## Description

The invention relates to a frame of a sunroof arrangement and/or of a vehicle shading system having the features of the preamble of patent claim 1.

A frame is known from practice and serves as a support for a cover element in a motor vehicle, by means of which cover element a roof opening can be closed or at least partially opened, and for an adjusting mechanism for adjusting the cover element between different positions. The frame comprises, on both sides with respect to a vertical longitudinal median plane of the roof, a guide rail extending in the longitudinal direction of the roof, a drive carriage of the adjusting mechanism being guided in a slidable manner in said guide rail. The guide rails arranged on both sides are connected to each other in particular in their front-side end portion via a cross member, which may be realized as a front portion of the frame, and the guide rails may be integrally realized together with the cross members as an injection-molded plastic part. This, however, limits the options of application of the frame to a specific type of roof, in particular to a specific type of vehicle.

A frame comprising the features of the preamble of claim 1 is known from document JP H09226379A.

The invention is based on the object of providing a frame of the kind mentioned above with which high functional integration is possible and which is suitable to be employed in a modular manner in different types of vehicles.

Said object is attained according to the invention by the frame having the features of patent claim 1.

Thus, a frame of a sunroof arrangement and/or of a vehicle shading system is proposed in which each of the guide rails is formed by an injection-molded plastic part, thus allowing a high degree of functional integrations based on their manufacture. Within the manufacturing step of injection molding, the coupling element for fixing the cross member is formed in an integral manner, i.e. in one piece with the guide rail. When assembling the frame, the cross member can be connected to the guide rails in an accurate position via the coupling elements. Hence, complex and potentially expensive connecting elements that ensure defined fixation of the cross member to the guide rails can be omitted. The integration of the coupling elements thus leads to a frame that can be produced economically.

By realizing the guide rails as injection-molded plastic parts, it is possible to integrally integrate additional functions on the frame. A mounting device for a shading system is integrally formed on each of the guide rails. Thus, no additional components allowing integration of the shading system will have to be attached or molded once the guide rails have been molded in an injection mold.

The shading system is realized as a roller blind arrangement, wherein the mounting device may comprise a mount into which a mounting pin of a winding shaft of the roller blind arrangement engages. This means that the roller blind can be mounted to the guide rails directly via the winding shaft.

The guide rails of the frame according to the invention can be standard components that can be modularly connected to at least one cross member, which is adapted to the respective specific application, so as to form a frame. This means that depending on the specific vehicle, suitable cross members can be connected to the standardized guide rails.

In particular, frame corner and/or edge portions can be integrated in one piece with the guide rails of the frame according to the invention, no additional components thus being necessary for said frame corner and/or edge portions. The coupling elements can be arranged in the corner and/or edge portions. Alternatively, the coupling elements can also be formed at any other section of the guide rails on the side facing toward the longitudinal median plane of the frame.

The frame according to the invention can be used in any kind of land, air or water-bound vehicle and in particular in passenger vehicles. The frame according to the invention is particularly suitable for a sunroof arrangement of a passenger vehicle or for a vehicle shading system that is used in the area of the roof, at side windows, windshields or rear windows.

The guide rails may comprise reinforcement elements, for example made of glass fibers and/or carbon fibers or the like. Further, metal or steel inserts for fixing the frame to the vehicle structure may be formed to the guide rails during the injection molding process.

Basically, the frame according to the invention has at least one cross member. Preferably, however, the frame according to the invention has several cross members, each of which is connected to the two guide rails via corresponding coupling elements, so as to increase the inherent rigidity of the frame.

In a preferred embodiment of the frame according to the invention, each of the coupling elements is formed by a projection facing toward the longitudinal median plane of the frame. The projection or protrusion may be a plug, a pin, a tap or a lug that engages in a interlocking way into a recess or a profile on a front face of the cross member. Thus, it is possible to produce the frame according to the invention by simply plugging together the guide rails and the cross members.

To ensure a connection between the guide rails and the cross member that is secured against unintentional release, the coupling elements in a preferred embodiment of the frame according to the invention each have a locking means for fixing the cross member without tools. The locking means may be snapping or latching means integrally formed on the respective coupling element.

In an embodiment not covered by the claims, the shading system comprises a sliding headliner. In this case, the mounting device for the shading system can comprise guide tracks for the sliders of the sliding headliner, which are formed within the step of molding of the guide rails in the corresponding injection molding tool.

The cross members of the frame according to the invention can be made of plastic or of a metallic material, such as aluminum. For example, the cross member is an extruded section, a roll-formed section or a section formed by a hydraulic shaping process, the coupling elements of the guide rail engaging into the cross-section thereof.

The invention also relates to a method of manufacturing a frame a sunroof arrangement and/or of a vehicle shading system of the kind described above. In this method, the guide rails are produced by way of a plastic injection-molding process, each guide rail being formed with a coupling element for the cross member. The cross member is produced separately. Subsequently, the cross member and the guide rails are connected to each other via the coupling elements of the guide rails.

When manufacturing the frame, the cross member is preferably locked to the coupling elements of the guide rails preferably by snapping or latching means, realizing a connection between the cross member and the guide rails that is secured against unintentional release.

Other advantages and advantageous embodiments of the subject-matter of the invention can be taken from the description, the drawing and the patent claims.

Preferred embodiments of a frame according to the invention are illustrated in a schematically simplified manner in the drawing and will be explained in more detail in the following description. In the drawing:
- Figure 1: shows a top view of a frame of an automobile sunroof arrangement prior to its assembly;
- Figure 2: shows the frame of Figure 1 in the assembled state;
- Figure 3: shows a perspective partial view of a rear-side edge/corner portion of a frame including a mounting device for a roller blind winding shaft; and
- Figure 4: shows a perspective partial view of a frame including a mounting device for a sliding headliner and not covered by the claims.

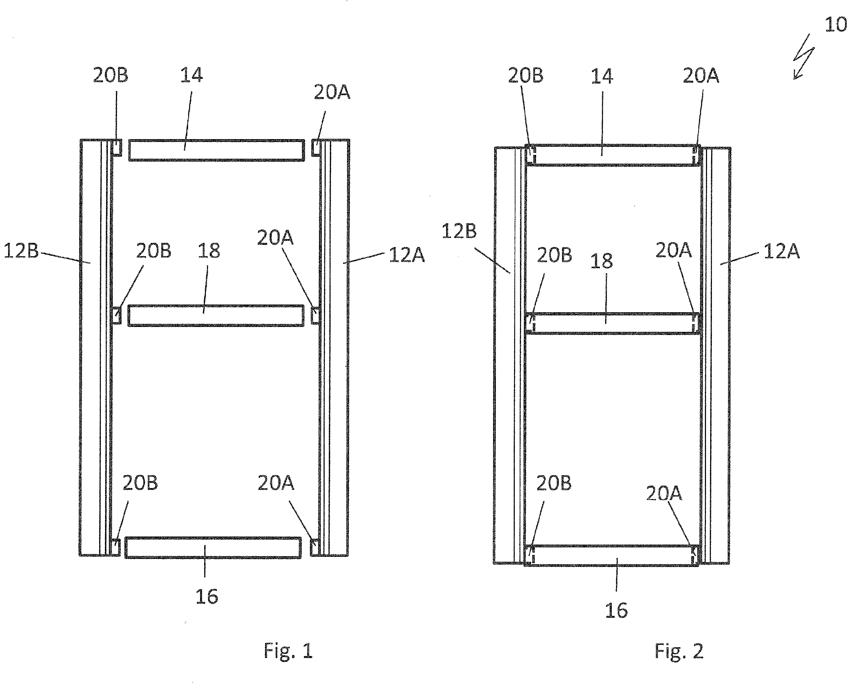

In Figures 1 and 2, a frame 10 of a sunroof arrangement of a passenger vehicle is illustrated. The frame 10 can also be integrated into the roof of the respective passenger vehicle. The sunroof comprises a cover element (not illustrated), by means of which an opening of the vehicle roof can optionally be closed or at least partially opened. The frame 10 is used to mount the cover element and to accommodate an adjusting mechanism for the cover element.

The frame 10 has a modular structure and, on both sides with respect to a vertical longitudinal median plane of the frame, it comprises a guide rail 12A and 12B, respectively, said guide rails extending in the longitudinal direction and being realized as injection-molded plastic parts. The two guide rails 12A and 12B, each of which serves, among other things, to guide a drive carriage and a drive cable, are connected to each other via a front-side cross member 14, a rear-side cross member 16 and a middle cross member 18. Each of the cross members 14, 16 and 18 is formed by an extruded section or a roll-formed section made of aluminum or steel.

To be able to connect the cross members 14, 16 and 18 to the guide rails, each of the two guide rails 12A and 12B has three plug-shaped or lug-shaped projections 20A and 20B, respectively, on its inner side facing toward the longitudinal median plane of the frame. The projections 20A engage into the cross-sections of the cross members 14, 16 and 18 on a front face thereof, whereas the projections 20B engage into the cross-sections of the cross members 14, 16 and 18 from the other front face. The projections 20A are integrally molded to the guide rail 12A, which is realized as an injection-molded plastic part. The projections 20B are integrally molded to the guide rail 12B, which is also realized as an injection-molded plastic part. To ensure a secure connection between the cross members 14, 16 and 18 and the guide rails 12A and 12B, the projections 20A and 20B each have a locking nose that engages into a corresponding recess of the respective cross member 14, 16 and 18, respectively. Owing to the locking noses or also to clips, no screws or bolts are needed.

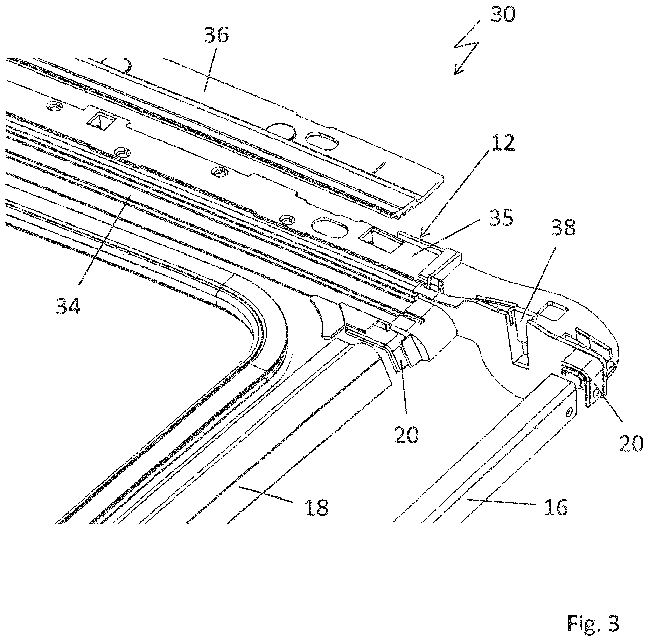

In Figure 3, another embodiment of a frame 30 is partially illustrated, said frame 30 being associated with a vehicle shading system for integration into a vehicle roof. In correspondence to the embodiment of Figures 1 and 2, the frame 30 comprises two guide rails 12, which extend in the longitudinal direction of the frame and are formed as injection-molded plastic parts. In Figure 3, only the guide rail that is arranged on the right with respect to the forward direction of travel of the respective vehicle is illustrated. The guide rail arranged on the left with respect to the forward direction of travel is mirror-symmetrical to the guide rail on the right and thus becomes immediately apparent from the following description.

The guide rail 12 has a guide track 34 that is limited by a bottom rail part 35 and by an upper rail part 36 that is connected to the bottom rail part 35. The guide track 34 serves to laterally guide a roller blind of the shading system.

Furthermore, the frame 30 comprises multiple cross members, a rear-side cross member 16 and a middle cross member 18 being illustrated in the drawing. The cross members are formed by roll-formed sections.

To be able to connect the cross members 16 and 18 to the guide rails 12, the latter have plug-shaped or lug-shaped projections 20 on their inner side, i.e. on their side facing toward the longitudinal median plane of the frame, said projections 20 being integrally molded to the respective guide rail 12 and engaging into the cross-sections of the cross members 16 and 18 at the front ends, thus connecting the guide rails 12 to the cross members 16 and 18.

Furthermore, between the cross members 16 and 18, each of the guide rails 12 has a slot-shaped vertically elongated recess 38 in which a mounting pin of a winding shaft for the roller blind can be mounted.

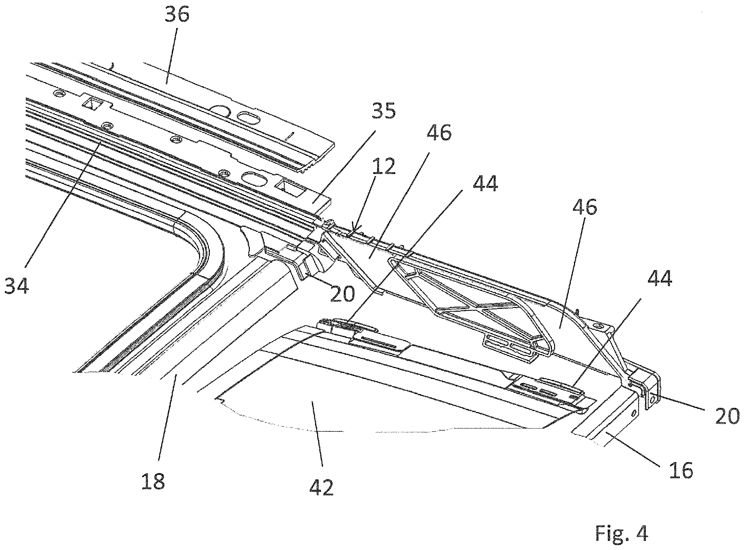

In Figure 4, another embodiment of a frame 40 is partially illustrated, which serves to mount a shading system comprising a sliding headliner 42. In correspondence to the embodiment of Figure 3, the frame 40 has, on both sides with respect to a vertical longitudinal median plane of the frame, a respective guide rail 12 made of an injection-molded plastic part, a bottom rail part 35 and an upper rail part 36 thereof limiting a guide track 34 for sliders 44 of the sliding headliner 42. Moreover, inserting tracks 46 for the sliders 44 of the sliding headliner 42 are integrally molded to the inner side of the guide rail 12 rear-side from a roof section and between a rear-side cross member 16 and a middle cross member 18.

The cross members 16 and 18, which are realized as extruded aluminum sections, are connected to the guide rails 12 via lug-shaped or plug-shaped projections 20. The projections 20 are integrally formed on the respective guide rail 12 and engage into the cross-section of the corresponding cross member 16 and 18, respectively. This means that the cross members 16 and 18 and the guide rails 12 are plugged together in a simple manner via the projections 12, which may additionally comprise a locking element for securing the connection.

### List of reference signs

- 10: frame
- 12, 12A, 12B: guide rail
- 14: cross member
- 16: cross member
- 18: cross member
- 20, 20A, 20B: projection
- 30: frame
- 34: guide track
- 35: bottom rail part
- 36: upper rail part
- 38: recess
- 40: frame
- 42: sliding headliner
- 44: slider
- 46: inserting track

## Claims

1. A frame of a sunroof arrangement and/or of a vehicle shading system, comprising, on both sides with respect to a vertical longitudinal median plane of the frame, a respective guide rail (12, 12A, 12B) extending in the longitudinal direction and at least one cross member (14, 16, 18) connecting the two guide rails (12, 12A, 12B), the guide rails (12, 12A, 12B) each being formed by an injection-molded plastic part, and each having a guide track (24) wherein at least one coupling element (20, 20A, 20B) is integrally formed on each of the guide rails (12, 12A, 12B) and that cross member (14, 16, 18) is fixed to the guide rails (12, 12A, 12B) via the coupling elements (20, 20A, 20B), **characterized in that** a mounting device for a roller blind arrangement is integrally formed on each of the guide rails (12), wherein the guide tracks (34) of the guide rails (12) are respectively limited by a bottom rail part (35) and by a separate upper rail part (36) that is connected to the bottom rail part (35) and wherein the guide tracks (34) serve to laterally guide a roller blind.

2. The frame according to claim 1, **characterized in that** each of the coupling elements (20, 20A, 20B) is formed by a projection facing toward the longitudinal median plane of the frame.

3. The frame according to claim 2, **characterized in that** the projection is a plug, a lug, a pin or a tab that engages into a recess or a profile on the front face of the cross member (14, 16, 18).

4. The frame according to any one of claims 1 to 3, **characterized in that** each of the coupling elements (20, 20A, 20B) has a locking means for fixing the cross member (14, 16, 18).

5. The frame according to claim 1, **characterized in that** the mounting device for the roller blind arrangement comprises a recess (38) into which a mounting pin of a winding shaft of the roller blind arrangement engages.

6. The frame according to any one of claims 1 to 5, **characterized in that** the cross member (14, 16, 18) is an extruded section or a roll-formed section.

## Patentansprüche

1. Rahmen einer Schiebedachanordnung und/oder eines Fahrzeugbeschattungssystems, umfassend bezogen auf eine vertikale Rahmenlängsmittelebene beidseits jeweils eine sich in Längsrichtung erstreckende Führungsschiene (12, 12A, 12B) und mindestens eine die beiden Führungsschienen (12, 12A, 12B) miteinander verbindende Querstrebe (14, 16, 18), wobei die Führungsschienen (12, 12A, 12B) jeweils aus einem Kunststoffspritzgießteil gebildet sind und jeweils eine Führungsbahn (34) aufweisen, wobei an den Führungsschienen (12, 12A, 12B) jeweils in einstückiger Weise mindestens ein Kopplungselement (20A, 20B) ausgeformt ist und die Querstrebe (14, 16, 18) über die Kopplungselemente (20, 20A, 20B) an den Führungsschienen (12, 12A, 12B) fixiert ist, **dadurch gekennzeichnet, dass** an den Führungsschienen (12) jeweils in einstückiger Weise eine Lagereinrichtung für eine Rolloanordnung ausgeformt ist, wobei die Führungsbahnen (34) der Führungsschienen (12) jeweils durch ein Schienenunterteil (35) und ein mit dem Schienenunterteil (35) verbundenes, separates Schienenoberteil (36) begrenzt sind und wobei die Führungsbahnen (34) zur Seitenführung einer Rollobahn dienen.

2. Rahmen nach Anspruch 1, **dadurch gekennzeichnet, dass** die Kopplungselemente (20, 20A, 20B) jeweils aus einem der Rahmenlängsmittelebene zugewandten Vorsprung gebildet sind.

3. Rahmen nach Anspruch 2, **dadurch gekennzeichnet, dass** der Vorsprung ein Zapfen, eine Lasche, ein Stift oder eine Nase ist, der bzw. die in eine stirnseitige Ausnehmung oder ein Profil der Querstrebe (14, 16, 18) eingreift.

4. Rahmen nach einem der Ansprüche 1 bis 3, **dadurch gekennzeichnet, dass** die Kopplungselemente (20, 20A, 20B) jeweils ein Rastmittel zum Fixieren der Querstrebe (14, 16, 18) haben.

5. .Rahmen nach Anspruch 1, **dadurch gekennzeichnet, dass** die Lagereinrichtung für die Rolloanordnung eine Aufnahme (38) umfasst, in die ein Lagerzapfen einer Wickelwelle der Rolloanordnung eingreift.

6. Rahmen nach einem der Ansprüche 1 bis 5, **dadurch gekennzeichnet, dass** die Querstrebe (14, 16, 18) ein Extrsionsteil oder ein Walzprofil ist.

## Revendications

1. Cadre d'un ensemble de toit ouvrant et/ou d'un système d'ombrage de véhicule, comprenant un rail de guidage (12, 12A, 12B) de chaque côté d'un plan médian longitudinal vertical du cadre, lesdits rails de guidage (12, 12A, 12B) s'étendant dans la direction longitudinale, et au moins une traverse (14, 16, 18) qui relie les deux rails de guidage (12, 12A, 12B) l'un avec l'autre, chaque rail de guidage (12, 12A, 12B) étant formé par une pièce en plastique moulée par injection et présentant une voie de guidage (34), au moins un élément de couplage (20, 20A, 20B) étant formé d'une seule pièce sur chacun desdits rails de guidage (12, 12A, 12B) et ladite traverse (14, 16, 18) étant fixée aux rails de guidage (12, 12A, 12B) par les éléments de couplage (20, 20A, 20B), **caractérisé en ce qu'**une installation de palier pour un ensemble de store est formée d'une seule pièce sur chacun des rails de guidage (12), chaque voie de guidage (34) des rails de guidage (12) étant limitée par une pièce de rail inférieure (35) et une pièce de rail supérieure (36) séparée qui est reliée avec la pièce de rail inférieure (35) et lesdites voies de guidage (34) servant à guider un store latéralement.

2. Cadre selon la revendication 1, **caractérisé en ce que** chacun des éléments de couplage (20, 20A, 20B) est formé par un épaulement orienté vers le plan médian longitudinal du cadre.

3. Cadre selon la revendication 2, **caractérisé en ce que** l'épaulement est un tenon, une languette, un maneton ou une éclisse qui s'engage dans une cavité ou un profilé sur la face frontale de la traverse (14, 16, 18).

4. Cadre selon l'une quelconque des revendications 1 à 3, **caractérisé en ce que** chacun des éléments de couplage (20, 20A, 20B) a un moyen de d'arrêt pour fixer la traverse (14, 16, 18).

5. Cadre selon la revendication 1, **caractérisé en ce que** l'installation de palier pour l'ensemble de store comprend un logement (38) dans lequel un tourillon d'un arbre d'enroulement de l'ensemble de store s'engage.

6. Cadre selon l'une quelconque des revendications 1 à 5, **caractérisé en ce que** la traverse (14, 16, 18) est une pièce extrudée ou un profilé laminé.
